Europäisches Patentamt

European Patent Office

Office européen des brevets

(11) Veröffentlichungsnummer : **0 085 990 B1**

# (12) EUROPÄISCHE PATENTSCHRIFT

(45) Veröffentlichungstag der Patentschrift :
17.08.88

(51) Int. Cl.⁴ : **F 03 D 1/06**

(21) Anmeldenummer : 83101267.9

(22) Anmeldetag : 10.02.83

(54) Einblattwindturbine mit Schalenrotor und Innenlager und überkritischer Rotorachslagerung.

(30) Priorität : 10.02.82 DE 3204541

(43) Veröffentlichungstag der Anmeldung :
17.08.83 Patentblatt 83/33

(45) Bekanntmachung des Hinweises auf die Patenterteilung : 17.08.88 Patentblatt 88/33

(84) Benannte Vertragsstaaten :
BE DE FR GB IT NL SE

(56) Entgegenhaltungen :
EP-A- 0 009 767
GB-A- 735 111
EPO-Monography, "Windmotors", D. David, 1981, Seiten 23/25
Proceedings of the Second Workshop on Wind Energy Conversion Systems, Washington, D.C., USA, June 9-11, 1975, S. 260
Machine Design, 20 May, 1976, T.W. Black: "Something in the wind? ERDA thinks so", S. 18-26

(73) Patentinhaber : Aero-Dynamik-Consult GmbH
Nobelstrasse 15
D-7000 Stuttgart 80 (DE)

(72) Erfinder : Wortmann, Frans-Xaver, Prof. Dr.-Ing.
Beethovenstrasse 4
D-7030 Böblingen (DE)
Erfinder : Mickeler, Siegfried
Tübingerstrasse 44
D-7403 Ammerbuch 1 (DE)
Erfinder : Schultes, Klaus
Solitude 3
D-7000 Stuttgart 1 (DE)
Erfinder : Mayer, Michael
Heiligenbergweg 10
D-7300 Esslingen-Zell (DE)

(74) Vertreter : Bartels, Hans et al
Lange Strasse 51
D-7000 Stuttgart 1 (DE)

## Beschreibung

Die Erfindung bezieht sich auf eine Einblattwindturbine mit einem Einblattrotor mit Gegengewicht und einer überkritisch gelagerten horizontalen Rotorwelle.

Durch die EP-A-0 009 767 ist eine Einblattwindturbine dieser Art bekannt, bei der die Lagerung des Einblattrotors auf der Rotorwelle im wesentlichen auf der Längsachse des Einblattrotors angeordnet ist. Dies wird dort dadurch erreicht, daß der Einblattrotor im Bereich der Lagerung zum Doppeldecker aufgespalten ist und das Gegengewicht mittels eines aus zwei Stangenpaaren bestehenden Gestänges mit dem Einblattrotor verbunden ist.

Wenn Windturbinen wirtschaftlich sein sollen, müssen ihre Herstellungskosten gering bleiben und ihre Zuverlässigkeit muß sehr hoch sein.

Beides wird ganz wesentlich vom Rotor beeinflußt. Seine Form bestimmt sowohl die Herstellungskosten, seine Vergrößerungsfähigkeit und seine aerodynamische Funktion. Die Art seiner Lagerung wie auch die Art der Rotorwellenlagerung hat entscheidenden Einfluß auf das dynamische Verhalten und damit auf die Lebensdauer der gesamten Maschine.

Der Erfindung liegt die Aufgabe zu Grunde, eine Einblattwindturbine zu schaffen, die mit möglichst geringen Herstellungskosten herstellbar ist und die eine hohe Zuverlässigkeit aufweist.

Diese Aufgabe ist erfindungsgemäß dadurch gelöst, daß der Einblattrotor als Schale ausgebildet ist und die Lagerung der Schale an der Rotorwelle im Inneren der Schale angeordnet ist. Um die Lagerung aufnehmen zu können, muß die Schale im Bereich der Lagerung einen ausreichend großen Querschnitt haben, durch den die Schale in der Nähe der Rotorwelle niedrige Spannungen hat und die erforderliche Steifigkeit auch bei sehr großen Durchmessern des Einblattrotors mit konventionellen Werkstoffen verwirklicht werden kann.

Ein weiterer Vorteil der Erfindung besteht darin, daß die Schale über die Rotorwelle bis zum Gegengewicht fortgesetzt werden kann, so daß für die Befestigung des Gegengewichtes keine besonderen Konstruktionen erforderlich sind. Vorzugsweise besteht hierbei der Einblattrotor aus einer einzigen Schale.

Die Erfindung ermöglicht eine sehr einfache Anordnung der Lagerung des Einblattrotors im Schwerpunkt, wobei sich hierzu besonders die Ausbildung der Lagerung als Kardanlager eignet, weil auf diese Weise eine Winkelfreiheit um zwei Achsen, nämlich um eine Schlagachse und um eine Anstellwinkelachse, am einfachsten möglich wird.

Diese Lagerung hat keine Fliehkräfte und keine Gewichtsmomente, sondern nur den Schub, das Gewicht und das Nutzmoment des Einblattrotors zu tragen. Das Kardanlager kann hierbei vergleichsweise kompakt und leicht sein.

Um es jedoch auch zu ermöglichen, den Schwerpunkt und damit die Lagerung auf der Leeseite des Einblattrotors anzuordnen, sieht eine abgewandelte Ausführungsform der Erfindung vor, daß der als Schale ausgebildete Einblattrotor im Bereich der Rotorwelle windabwärts geknickt ist, so daß der Schwerpunkt und damit die Lagerung zur Leeseite des Rotorblattes wandert.

Die Erfindung ist in der folgenden Beschreibung von zwei in der Zeichnung dargestellten Ausführungsbeispielen im einzelnen erläutert.

Es zeigen :

Fig. 1 und 2 Seitenansichten des Einblattrotors in den Blickrichtungen senkrecht bzw., axial zur Rotorwellenachse ;

Fig. 3 eine abgebrochene Darstellung eines die Rotorwellenachse enthaltenden Schnittes durch den die Lagerung enthaltenden Teil des Einblattrotors nach den Fig. 1 und 2 ;

Fig. 4 eine perspektivische Ansicht der Lagerung der Rotorwelle.

Die in der Zeichnung dargestellte Einblattwindturbine weist einen Einblattrotor auf, der aus einer einzigen Schale 1 besteht, deren Querschnitt nahe der Rotorwelle 2 groß genug ist, um dort eine räumlich kompakte Lagerung 3 aufzunehmen. Die großen Querschnitte der Schale in der Nähe der Rotorwelle 2 sorgen für niedrige Spannungen und machen es möglich, die erforderlichen Steifigkeiten auch bei sehr großen Durchmessern und konventionellen Werkstoffen zu verwirklichen.

Die Lagerung 3 des Einblattrotors im Schwerpunkt wird vorzugsweise als handelsübliches Kardanlager ausgeführt, weil auf diese Weise eine Winkelfreiheit um zwei Achsen, nämlich um eine Schlagachse und um eine Anstellwinkelachse am einfachsten möglich wird. Dieses Lager hat keine Fliehkräfte und keine Gewichtsmomente, sondern nur den Schub, das Gewicht und das Nutzmoment des Einblattrotors zu tragen. Das Kardanlager kann deshalb vergleichsweise kompakt und leicht sein. Es wird durch topfartige Übergangsstücke 4 mit der Schale 1 verbunden. Das Kardanlager muß im oder nahe beim Schwerpunkt des Einblattrotors liegen, d. h. es wird sich normalerweise im Inneren der Schale befinden. Es ist jedoch auch möglich, die Rotorschale im Bereich der Achse windabwärts zu knicken, so daß der Schwerpunkt und damit das Innenlager zur Leeseite des Rotorblattes wandert.

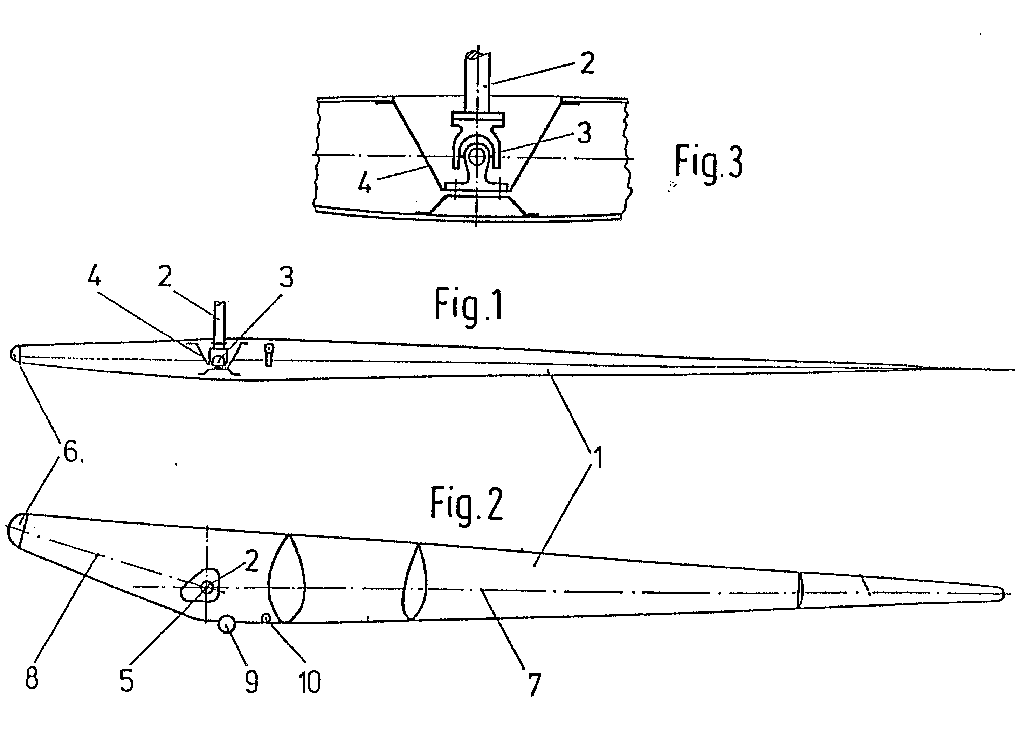

Ein weiteres Merkmal der als Ausführungsbeispiel dargestellten Schale 1 besteht darin, daß in der Draufsicht, d. h. in Richtung der Rotorwellenachse gesehen, das Gegengewicht 6 des Einblattrotors nicht auf der Verlängerung der Mittellinie 7 des Einblattrotors liegt. Vielmehr ist es vorteilhaft, die Verbindungslinie 8 Kardangelenk-Gegengewicht ähnlich wie bei einem Bumerang gegenüber der Mittellinie des aerodynamisch wirksamen Rotorblattes zu knicken (s. Fig. 2).

Damit der Schwerpunkt des Einblattrotors etwa in der Schalenmitte bleibt, ist im letztgenannten Fall ein Ausgleichsgewicht 9 in der Nähe der Rotorwelle notwendig. Dabei hat es sich als günstig herausgestellt, das Propellermoment oder Deviationsmoment der Einblattrotormasse zum Verschwinden zu bringen. Das läßt sich erreichen, indem man das Gegengewicht 6 und/oder das Ausgleichsgewicht 9 in zwei Teilmassen aufsplittert.

Die aktive Steuerung des Einblattrotors durch einen Regler wie auch die passive Selbststeuerung des Einblattrotors erfolgt in bekannter Weise durch eine Steuerstange, die an einem Gelenkpunkt 10 angreift.

Im Gegensatz zu symmetrischen Rotoren erzeugt ein Einblattrotor selbst bei homogener Anströmung eine aerodynamische Unwucht. Es ist deshalb für die Funktionstüchtigkeit und Lebensdauer der Einblatturbine von großer Bedeutung, die vom Einblattrotor ausgehenden periodischen und stochastischen Querkräfte vom Turm fernzuhalten und dadurch Turm und Rotor zu entkoppeln.

Das gelingt, wenn man den Rotor um eine freie Achse rotieren läßt. Man hat dafür bereits eine biegsame Rotorwelle vorgeschlagen. Statt dessen kann auch der Rotor mit seiner Welle federnd oder gelenkig gelagert sein.

Eine noch wesentlich bessere Entkopplung erhält man, wenn man vom physikalischen Prinzip des Stoßzentrums Gebrauch macht. Dieses Zentrum ist dadurch definiert, daß bei periodischer oder stoßartiger Erregung z. B. am Ende eines Balkens oder einer Welle je nach Massenverteilung immer ein Punkt, d. h. das Stoßzentrum zu finden ist, der durch Trägheitskräfte bedingt in Ruhe bleibt.

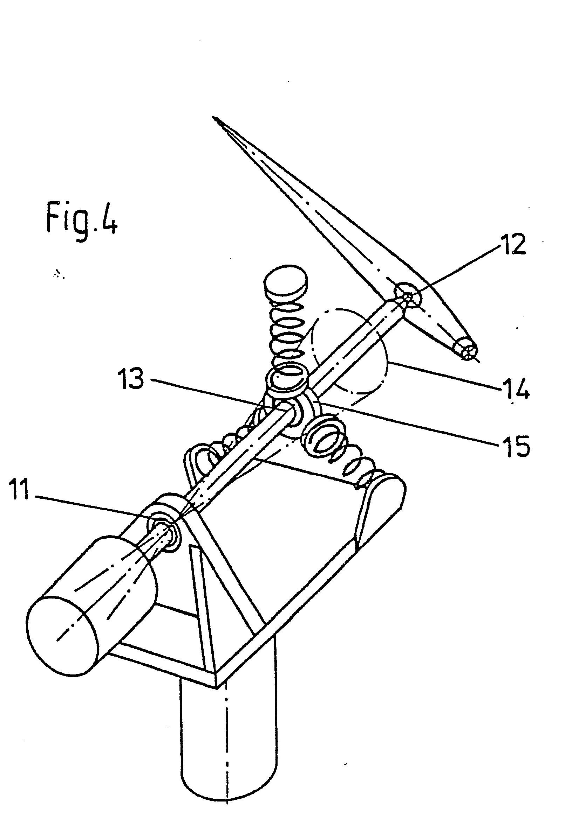

Dabei liegt, vgl. Fig. 4, das Stoßzentrum 11 von der Erregerstelle 12 aus gesehen, immer jenseits des Schwerpunktes 13 der Massenverteilung. In diesem Punkt 11 läßt sich ein Lager anbringen, das zwar eine Nick-Gierbewegung, d. h. ein Taumeln der Rotorwelle, zuläßt, was in Fig. 4 durch den gestrichelten Kegel 14 angedeutet ist, aber in jeder anderen Hinsicht fest mit dem Turm verbunden sein kann, ohne Querkräfte zu übertragen.

Da der Schwerpunkt 13 immer zwischen Stoßzentrum 11 und Erregerstelle 12 liegt, muß die horizontale Rotorwelle noch gegenüber der Schwerkraft abgestützt werden. Diese zweite Lagerstelle 15 kann und muß sehr weich gebettet werden, so daß die Eigenfrequenz der Nick-Gierbewegung möglichst unter einem Drittel der Nenndrehfrequenz des Einblattrotors liegt.

Außerdem ist es vorteilhaft, wenn beide Frequenzen in Nicken und Gieren gleich groß sind, was z. B. leicht durch eine sternförmige Anordnung von Zug- oder Druckfedern erreicht werden kann.

## Patentansprüche

1. Einblattwindturbine mit einem Einblattrotor mit Gegengewicht (6) und einer überkritisch gelagerten, horizontalen Rotorwelle (2), dadurch gekennzeichnet, daß der Einblattrotor als Schale (1) ausgebildet ist und die Lagerung (3) der Schale (1) an der Rotorwelle (2) im Inneren der Schale angeordnet ist.

2. Einblattwindturbine nach Anspruch 1, dadurch gekennzeichnet, daß der Einblattrotor aus einer einzigen Schale (1) besteht.

3. Einblattwindturbine nach Anspruch 1 oder 2, dadurch gekennzeichnet, daß die Lagerung (3) als Kardanlager ausgebildet ist.

4. Einblattwindturbine nach einem der Ansprüche 1 bis 3, dadurch gekennzeichnet, daß die Schale (1) in der zur Rotorwelle (2) senkrechten Ebene geknickt ist, so daß das Gegengewicht (6) in der Umlaufrichtung voraus angeordnet ist, und daß zur Lokalisierung des Schwerpunktes ein Ausgleichsgewicht (9) vorhanden ist.

5. Einblattwindturbine nach Anspruch 4, dadurch gekennzeichnet, daß das Gegengewicht (6) und/oder die Ausgleichsmasse (9) in zwei Massen aufgeteilt sind.

6. Einblattwindturbine nach einem der Ansprüche 1 bis 5, dadurch gekennzeichnet, daß eine Lagerstelle der Rotorwelle (2) im oder nahe dem Stoßzentrum (11) der Rotorwelle (2) liegt.

7. Einblattwindturbine mit einem Einblattrotor mit Gegengewicht und einer überkritisch gelagerten, horizontalen Rotorwelle (2), dadurch gekennzeichnet, daß der Einblattrotor als Schale (1) ausgebildet ist, die im Bereich der Rotorwelle (2) windabwärts geknickt ist, und daß die Lagerung auf der Leeseite der Schale angeordnet ist.

## Claims

1. Single-vane wind turbine with a single-vane rotor with counterweight (6) and a hypercritically suspended horizontal rotor shaft (2), characterised in that the single-vane rotor is constructed in the form of a shell (1) and the mounting (3) of the shell (1) is disposed at the rotor shaft (2) inside the shell.

2. Single-vane wind turbine according to claim 1, characterised in that the single-vane rotor consists of a single shell (1).

3. Single-vane wind turbine according to claim 1 or 2, characterised in that the mounting (3) is constructed as a Cardan bearing.

4. Single-vane wind turbine according to one of claims 1 to 3, characterised in that the shell (1) is kinked in the plane at right angles to the rotor shaft (2), so that the counterweight (6) is arranged at the front in the direction of rotation and in that a counterweight (9) is provided for localising the centre of gravity.

5. Single-vane wind turbine according to claim 4, characterised in that the counterweight (6) and/or the equalisation mass (9) is divided into two masses.

6. Single-vane wind turbine according to one of claims 1 to 5, characterised in that a bearing position of the rotor shaft (2) is located in or near the centre of impact (11) of the rotor shaft (2).

7. Single-vane wind turbine with a single-vane rotor with counterweight and a hypercritically suspended horizontal rotor shaft (2), characterised in that the single-vane rotor is constructed as a shell (1) which is kinked downwind in the area of the rotor shaft (2) and in that the mounting is arranged on the leeward side of the shell.

**Revendications**

1. Turbine éolienne monopale comprenant un rotor monopale muni d'un contrepoids (6) et d'un arbre de rotor (2) horizontal et à montage hypercritique, caractérisée en ce que le rotor monopale est constitué par une coquille creuse (1) et que l'articulation (3) de la coquille creuse (1) sur l'arbre (2) du rotor est agencée à l'intérieur de la coquille.

2. Turbine éolienne monopale selon la revendication 1, caractérisée en ce que le rotor monopale est constitué par une coquille unique (1).

3. Turbine éolienne monopale selon la revendication 1 ou 2, caractérisée en ce que l'articulation (3) est constituée par une articulation de Cardan.

4. Turbine éolienne monopale selon une des revendications 1 à 3, caractérisée en ce que la coquille creuse (1) est coudée dans le plan perpendiculaire à l'arbre (2) du rotor, de manière que le contrepoids est disposé en avance dans le sens de la rotation et en ce qu'on utilise une masselotte d'équilibrage (9) pour fixer la position du centre de gravité.

5. Turbine éolienne monopale selon la revendication 4, caractérisée en ce que le contrepoids (6) et/ou la masselotte d'équilibrage (9) est ou sont subdivisés en deux masses.

6. Turbine éolienne monopale selon une des revendications 1 à 5, caractérisée en ce qu'un palier de l'arbre (2) du rotor se trouve au nœud de vibrations (11) de l'arbre (2) du rotor ou à proximité de ce nœud.

7. Turbine éolienne monopale comprenant un rotor monopale muni d'un contrepoids et un arbre de rotor horizontal (2) à montage hypercritique, caractérisée en ce que le rotor monopale est constitué par une coquille creuse (1) qui est coudée vers l'arrière, relativement au vent, dans la région de l'arbre (2) du rotor, et en ce que l'articulation est située sur le côté sous le vent de la coquille.

Fig.3

Fig.1

Fig.2

0 085 990

Fig.4